# EUROPEAN PATENT APPLICATION

(11) **EP 3 845 384 A1**
(43) Date of publication of application: **07.07.2021**
(21) Application number: 19220042.6
(22) Date of filing: 30.12.2019
(51) Int. Cl.: B33Y 10/00, B22F 3/00, C09J 129/04, C09J 139/06

(54) **BINDER COMPOSITION FOR ADDITIVE MANUFACTURING METHOD, ADDITIVE MANUFACTURING METHOD USING THE SAME, AND GREEN PART OBTAINABLE THEREBY**

(71) Applicant: Höganäs AB (publ), 263 83 Höganäs (SE)
(72) Inventor: Kjellén, Lisa, 25657 Ramlösa (SE); Andersson, Bo-Göran, 26362 Viken (SE); Conboy, Clare, Cambridge CB3 0PX (GB)

(57) **Abstract**

The present invention relates to a binder composition that is suitable for use in an additive manufacturing method, in particular an additive manufacturing method wherein particles are fused by ejecting a binder composition on e.g. a powder bed (Powder bed 3D printing, also known as "binder jetting", "drop-on-powder" or simply "3D printing" in the following), and a method using the same. The present invention also pertains to a Green Body that is formed as an intermediate in such a method, obtainable by binding together particles using the binder composition of the present invention.

## Description

### Field of the Invention

The present invention relates to a binder composition that is suitable for use in an additive manufacturing method, in particular an additive manufacturing method wherein particles are fused by ejecting a binder composition on e.g. a powder bed (Powder bed 3D printing, also known as "binder jetting", "drop-on-powder" or simply "3D printing" in the following), and a method using the same. The present invention also pertains to a Green Body that is formed as an intermediate in such a method, obtainable by binding together particles using the binder composition of the present invention.

### Background of the Invention

3D printing is a process for manufacturing parts, such as tooling and prototype parts, in a layered fashion. A powdered material is deposited in a layer and bound in selected regions, defined by a computer model of the part, by a liquid binder material which is applied to the layer of powdered material using e.g. an ink-jet printhead, thereby forming a layer of bound powder particles. Fresh powder is added, and again bound by the liquid binder material to the underlying bound powder layer according to the desired structure. These steps are repeated layer by layer to build up the so-called Green Body. Excess powder is removed, and the Green Part is treated by so-called unbinding, which may be performed thermally, by dissolution or catalytically, to remove the binder composition to form a Brown Body. The Brown Body is typically sintered in order to obtain the final part.

Commonly used powders include aluminum oxide, zirconium silicate, fused silica, stainless steel, tungsten, and silicon carbide. Colloidal silica is often used as the binder for the ceramics, and Acrysol® latex emulsion for the metals.

After "printing" all the layers, the part is treated in a manner appropriate to the part and the materials chosen, such as removing excess (unbound) powder to form a Green Body, and sintering to form the final object (also referred to as Sintered Body).

Main advantages of this method are that it is adaptable to a wide-range of metallic and ceramic powders, it has a large printing envelope - which can be easily extended to produce even larger parts - and it offers a high throughput. Consequently large and complex parts are easily created.

While the technology is as such established, limited research has yet been done on the composition of the binder used in such a process. For instance, binder compositions comprising water, silica particles, propylene glycol, triethanolamine, diethylene glycol monobutyl ether, polyethylene glycol and thymol blue are described in US 5,660,621 A. A disadvantage of this composition is the presence of inorganic non-volatile material such as silica, which can distort the structure of e.g. parts made from metal powder. Another binder composition for ceramic particles comprising water and propylene glycol as well as possibly other components is described in WO 2015 171 639 A1.

### Objects of the present invention

There is still a need for new binder compositions that are suitable for an additive manufacturing method, in particular 3D printing wherein a binder composition is ejected on particles of a sinterable material.

Am ideal binder composition (also simply referred to as "binder") should have the following properties:
- The binder should have a suitable viscosity such as to be ejectable from a printhead, such as an inkjet printhead, which may be a thermal printhead or a piezo printhead;
- The binder should have a suitable viscosity and surface tension in order to be able to penetrate into a powder bed, yet to stay on the particles on which has been deposited (spreading behavior);
- The binder should tolerate significant time intervals without ejection in the printhead without causing clogging of the nozzles or dry-out of the printhead, as this will lead to imperfections in the final part;
- The binder should be compatible with a wide range of materials used as building material (powder);
- The binder should be capable of being substantially removed completely during the debinding step in order not to impair the physical properties of the final part;
- The binder must provide sufficient strength to the Green Body in order to allow safe handling and avoid damage to the Green Body upon removal of excess powder;
- The binder must have suitable rheological properties in order to be ejected precisely by a typical printhead, without depositing binder by accidental leakage onto the powder bed;
- The dryer should have the ability to dry in relatively short time in order to achieve good productivity;
- The binder should be safe to use and should contain no or little amounts of hazardous chemicals;
- The binder should be environmentally friendly and should produce little organic contaminants during use and debinding. Also, the debinding products should preferably not be hazardous to either man or machine.

As outlined above, there are many properties that are desired for a binder composition, which are in part conflicting or difficult to obtain simultaneously. The present invention aims at providing a binder and an additive manufacturing method, in particular a 3D printing method, employing the binder, which is able to meet some, most or all of the above requirements, and/or that shows a good balance of properties as far as these are conflicting.

The present invention further aims at providing a Green Body having sufficient strength to allow safe handling, e.g. during removal of excess powder or during transport.

### Summary of the present invention

The present inventors have found that the above objects can be solved by the following aspects:
1. A composition that is a liquid at 25 C and 10⁵ Pa pressure, the composition comprising
   a. one or more solvents selected from water-miscible solvents and water;
   b. one or more polymers selected from the group consisting of polyvinyl pyrrolidones having a weight average molecular weight of 2,500 to 80,000 and polyvinyl alcohols having a weight average molecular weight of 2,500 to 80,000, the total amount of the one or more polymers being 1 - 15% by weight, relative to the total weight of the composition;
   c. one or more humectants in a total amount of 0.1 to 25% by weight, relative to the total weight of the composition; and
   d. optionally one or more surfactants in a total amount of up to 25% by weight of the total weight of the composition.
2. The composition according to aspect1, which has a dynamic viscosity η of 1.0 - 6.0 mPa·s, preferably 1.3 - 4.0 mPa·s, more preferably 1.5 to 3.0 mPa·s.
3. The composition according to aspect1 or aspect2, wherein the amount of the one or more solvents is from 45 to 85% by weight; relative to the total weight of the composition.
4. The composition according to any one of aspects 1 to 3, wherein the polymers b. comprise or consist of one or more polyvinyl pyrrolidones, and wherein preferably all of the one or more polyvinyl pyrrolidones have a K-value, determined for an 5 wt.-% aqueous solution, of 5 to 35.
5. The composition according to any one of aspects 1 - 4, which has a surface tension of 22 - 32 mN/m.
6. The composition according to any one of aspects 1 to 5,
   wherein the one or more solvents consist of water only,
      or
   wherein the one or more solvents form a mixture consisting of 70% by weight or more of water and 30% by weight or less of one or more water-soluble solvents,
      wherein the one or more water-soluble solvents are preferably selected from the group of C1 - C6 monohydric primary, secondary and tertiary alcohols and C1 - C6 ketones.
7. The composition according to any one of aspects 1 to 6, wherein the one or more humectants are selected from dihydric and trihydric C1 - C6 alcohols, which are preferably selected from ethylene glycol and glycerol, and random or block poly (alkylene oxides), preferably polyethylene oxide, polypropylene oxide, and block polyethylene oxide - polypropylene oxide.
8. The composition according to any one of aspects 1 to 7, wherein the optional surfactant is present and is selected from anionic, cationic, and nonionic surfactants.
9. The composition according to aspect8, wherein the surfactant is nonionic and is preferably a polymeric surfactant having poly(alkylene oxide) units.
10. Use of a composition according to any one of aspects 1 to 9 as a binder for inorganic, preferably metallic, particles.
11. Use according to aspect10, which involves the ejection of the composition from a printhead, preferably an inkjet print head or a piezo print head.
12. An additive manufacturing method for producing an article, comprising the steps of
   i. providing particles of an inorganic material, preferably a metallic material;
   ii. adhesively binding a portion of the particles by adding a composition as defined in any of aspects 1 to 9 as a binder composition;
   iii. following step ii., providing further particles and then adhesively binding a portion thereof by adding a composition as defined in any of aspects 1 to 9 as a binder composition;
   iv. if necessary, removing excess particles that are not adhesively bound,
      to form a green body, and subsequently
   v. removing the binder composition to form a brown body; and
   vi. sintering the brown body to obtain the desired article.
13. The additive manufacturing method according to aspect 12, wherein the particles are made from a metal or metal alloy, preferably stainless steel.
14. The additive manufacturing method according to aspect 12 or 13, wherein the addition of the composition as defined in any one of aspects 1 to 9 in step ii. and step iii. involves ejecting the composition from a print head.
15. The method as defined in aspect 14, wherein the printhead is an inkjet print head or a piezo print head.
16. The method according to any one of aspects 12 to 15, wherein the particles in step i. are provided in the form of a powder bed.
17. A green body, obtainable by a process comprising process steps i. - iv. as defined in any one of aspects 12 to 16.

Further and preferred features will be described in the following. It should be noted that all features of the present invention can be combined, and that in particular the following preferred, more preferred and most preferred features can be combined, including a combination with any of the aspects described above.

### Definitions

The following terms and definitions will be used and apply in the following detailed description:
Any given range referred to by a lower and upper limit, such as for example "2 to 5" or "between 2 and 5", includes the lower and the upper value, as any value in between. Values greater than the lower limit or lower than the upper limit are explicitly included. The term is thus to be understood as abbreviation for the expression "[lower limit] or greater, but [upper limit] or lower".

Whenever reference is made to ranges and more preferred ranges, the lower and upper limits can be freely combined. As one example, the phrase "5 to 10, preferably 6 to 8" also includes the ranges of 5 to 8 and 6 to 10.

In the present invention, all physical parameters are measured at room temperature (20°C) and at atmospheric pressure (10⁵Pa), unless indicated differently or prescribed differently by a standard such as ISO or ASTM. In case there should be a discrepancy between a standard method and the methods described and referred to in the following description, the present description prevails.

As used herein, the indefinite article "a" indicates one as well as more than one and does not necessarily limit its reference noun to the singular.

The term "about" means that the amount or value in question may be the specific value designated or some other value in its neighborhood, generally within a range of ±5% of the indicated value. As such, for instance the phrase "about 100" denotes a range of 100 ± 5, and the phrase "about 60" denotes a range of 60 ± 3.

The term and/or means that either all or only one of the elements indicated is present. For instance, "a and/or b" denotes "only a", or "only b", or "a and b together". In the case of "only a" the term also covers the possibility that b is absent, i.e. "only a, but not b".

The term "comprising" as used herein is intended to be non-exclusive and openended. A composition comprising certain components thus may comprise other components besides the ones listed. However, the term also includes the more restrictive meanings "consisting of" and "consisting essentially of". The term "consisting essentially of" allows for the presence of up to and including 10 weight%, preferably up to and including 5% of materials other than those listed for the respective composition, which other materials may also be completely absent. In the latter case, the composition "consists of" the recited components.

The K value of polymers such as PVP is a function of the average molecular weight, the degree of polymerization and the intrinsic viscosity. The K value is derived from viscosity measurements on an aqueous solution having a concentration of 1 g polymer/100 ml solution at 20 °C and calculated using Fikentscher's formula. The K value is typically indicated by the manufacturer, but can also be determined using the method specified in DIN EN ISO 1628-1:2012-10.

The dynamic viscosity and the surface tension of the binder composition of the present invention can be determined by the methods described in the examples section.

The weight average molecular weight of polymers and the number average molecular weight of polymers can be determined by GPC, using a polystyrene standard. When in the present application reference is made to the molecular weight of a polymer without specifying whether the weight average or number average molecular weight is meant, reference is made to the weight average molecular weight.

A water-miscible solvent in the present invention defines an organic compound that has unlimited miscibility with water at 20°C, i.e. that can be mixed at any ratio with water without forming two phases.

The term "aqueous solution" relates to a solution wherein the solvent is water only.

### Brief Description of the Drawings

Fig. 1 shows the experimentally determined viscosity in relation to the shear rate applied. Note the log scale on the x-axis.
Fig. 2 illustrates the influence of the K value or molecular weight and the concentration of the polymer on the viscosity of the binder composition.
Fig. 3 illustrates the influence of the polymer content on the Green Strength.
Fig. 4. illustrates the influence of the viscosity of the binder composition on the Green Strength.

### Detailed Description of the Invention

### A. Binder Composition

The composition of the present invention, which is suitable for use as a binder in 3D printing (binder jetting) additive manufacturing process, is a composition that is a liquid at 25 C and 10⁵ Pa pressure, the composition comprising
a. one or more solvents selected from water-miscible solvents and water;
b. one or more polymers selected from the group consisting of polyvinyl pyrrolidones having a weight average molecular weight of 2,500 to 80,000 and polyvinyl alcohols having a weight average molecular weight of 2,500 to 80,000, the total amount of the one or more polymers being 1 - 15% by weight, relative to the total weight of the composition;
c. one or more humectants in a total amount of 0.1 to 25% by weight, relative to the total weight of the composition; and
d. optionally one or more surfactants in a total amount of up to 25% by weight of the total weight of the composition.

The components will be described in more detail below:

### a. Solvent

The solvent may be water, a water-miscible solvent or any mixture thereof. Preferably, the solvent is formed by 50% by weight or more, such as 70% by weight or more, of water, relative to the total weight of all solvents. While pure water is preferable from an environmental point of view, a mixture of a water-miscible solvent and water ("mixed solvent") is able to reduce drying times and may also allow obtaining a lower surface tension as compared to pure water. Accordingly, a mixed solvent may be preferable from a practical point of view. Herein, the amount of the water-miscible solvent is not particularly limited, but may be 50% by weight or less, such as 30% by weight or less, of the total weight of the solvent used.

The water-miscible solvent is not particularly limited, and any water-miscible solvent can be used. Examples include monohydric alcohols having 1 to 3 carbon atoms, such as methanol, ethanol, 1-propanol and 2-propanol, acetaldehyde, acetone, acetonitrile, methyl isocyanide, tetrahydrofuran, or 1,4 dioxane. The solvent is preferably a monohydric alcohol having 1 to 3 carbon atoms, preferably 2 or 3 carbon atoms, with ethanol and isopropanol being particularly preferable.

The amount of solvent is not particularly limited, but is typically from 45 to 85% by weight relative to the total weight of the composition

### b. Polymer

The polymer present in the composition of the present invention is selected from the group consisting of polyvinyl pyrrolidones (PVP) having a weight average molecular weight of 2,500 to 80,000 and polyvinyl alcohols (PVOH) having a weight average molecular weight of 2,500 to 80,000.

The PVP is commercially available, and may be selected from suitable grades, e.g. from K5 - K70, such as K12, K15, K17, K30, K32, K35, K40 and K50. Also, suitable polyinvyl alcohols are commercially available. The PVOH, which is commonly prepared by hydrolysis of a polymer of vinyl acetate, typically has a degree of hydrolysis of 85% or greater.

The PVP and PVOH are typically homopolymers, but the use of copolymers is equally possible as long as the resulting change in properties does not lead to an unacceptable deterioration of the properties of the binder composition during use. This means in particular that the copolymers must equally be capable of being debinded at suitable temperatures without leaving substantial amounts of residues. These copolymers are encompassed by the terms "polyvinyl pyrrolidone" and "polyvinyl alcohol" as used in the present invention, unless explicit reference to a homopolymer or copolymer is made.

If a copolymer is used, it may take the form of a random copolymer, a block copolymer or a graft copolymer. It is preferred that the amount of repeating units derived from monomers other than vinyl pyrrolidone and vinyl alcohol (respectively vinyl acetate, if the PVOH is prepared by polymerization of vinyl acetate and subsequent hydrolysis) is less than 25% by weight, more preferably 10% by weight, and further preferably 5% by weight of the respective copolymer. Such other monomers may for instance be selected from suitable (meth)acrylates and (meth)acrylic acid.

For PVP/PVOH copolymers, the relative amount of repeating units derived from vinyl pyridine and vinyl alcohol (or typically rather a vinyl ester, such as vinyl acetate, followed by hydrolysis) can be chosen arbitrarily. Of course, the limitations regarding the weight average molecular weight also apply in case a copolymer is employed, and in this case the weight average molecular weight refers to that of the copolymer.

Without wishing to be bound by theory, it is believed that the polymer b. fulfills at least the functions of adjusting the viscosity of the binder composition such as to be suitable for ejection from a printhead, and of adhesively binding the particles of building material after application thereon, at least after evaporation of the solvent. While the capability of adhesively bonding the particles of building material depends mainly on the concentration of polymer b. in the binder composition and the applied amount of binder composition, the viscosity of the binder composition is a function of concentration and molecular weight of the polymer. This is expressed by the so called K-value. The K value is a function of the average molecular weight, the degree of polymerization and the intrinsic viscosity, and can be calculated according to Fikentscher's formula.

As derivable from Fikentscher's formula, the K value can be determined by measuring the viscosity of a solution of the polymer and the solvent. Since the ratio between the two determined the K value, the K value is believed to be independent of the measurement method used, as deviations in absolute values is of no relevance as long as the ratio between the measured viscosities stays the same and the polymer solutions typically show a Newtonian behavior over a large range of shear rates. It can for instance be determined by measurements of viscosity such as specified in DIN EN ISO 1628-1:2012-10. Note that the K value is typically indicated by the manufacturer, and that the K value is different from the weight average molecular weight as determined by GPC.

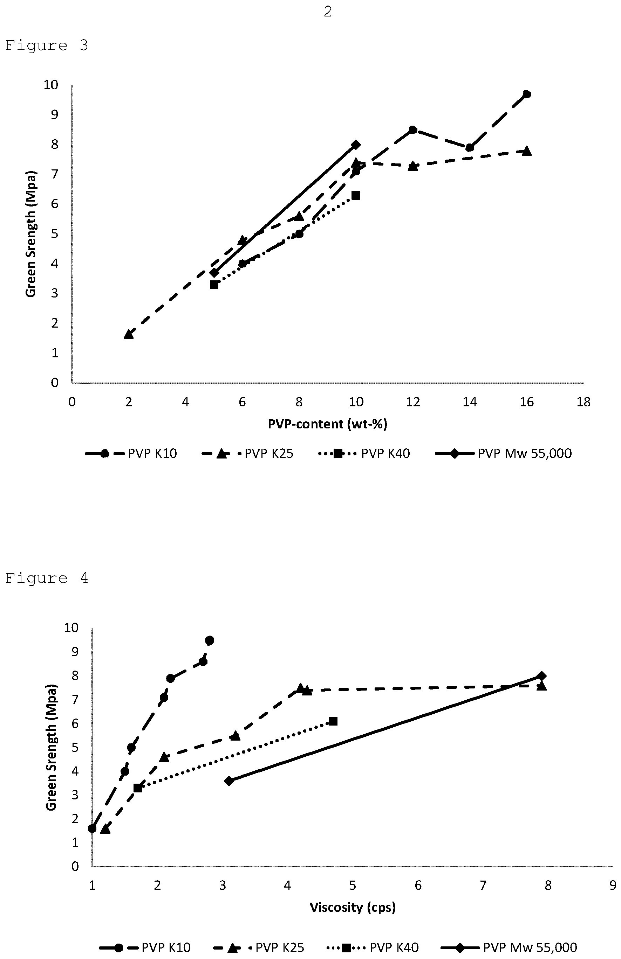

The amount of polymer b. in the binder composition of the present invention is generally from 1 to 15% by weight, relative to the total weight of the composition. At these values, a good function for binding the particles of building materials together and sufficient strength (Green Strength) can be obtained, as illustrated in Figure 3. Preferably, the amount of polymer b. is from 2 - 13 % by weight, such as from 3 to 12 % by weight or from 5 to 11 % by weight.

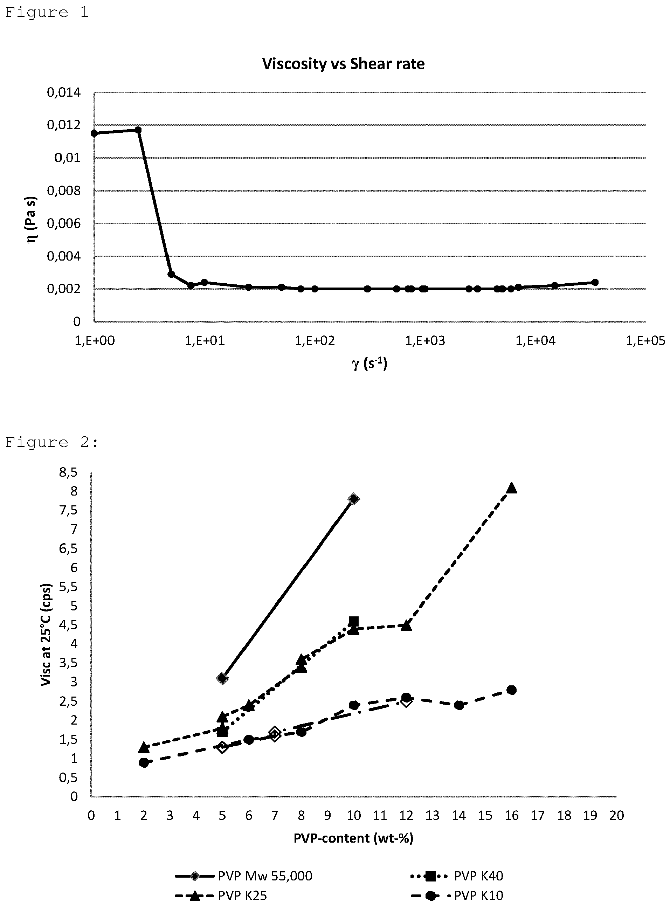

As derivable from Figure 2, the viscosity of the binder composition can be adjusted by choosing a polymer having the appropriate K value (related to the molecular weight) in order to obtain the desired viscosity for a given application. The suitable viscosity depends also on the intended application and the equipment used, e.g. the printhead, and can be determined by a skilled person. In general, for obtaining a given viscosity, a lower amount of polymer may be compensated by using a polymer having a higher molecular weight, and vice versa. The viscosity of the composition is preferably 1.0 - 12.0 mPa·s, more preferably 1.5 - 6.0 mPa·s, still more preferably 1.7 to 3.5 mPa·s. In one embodiment, the viscosity is 3.0 mPa·s or less.

In view of the above, the K value of the PVP or PVOH homopolymer or copolymer is typically from 3 to 80, and preferably from 5 to 50, such as from 5 to 40 or from 10 to 35. It is possible to use mixture of one or more polymers with different K values. In this case, the above ranges for the K value may apply to only one of the polymers, but preferably apply to all of the polymers.

### c. Humectant

The binder composition of the present invention further contains a humectant in an amount of 0.1 - 25.0% by weight, preferably 1.0 - 20.0% by weight, such as from 5.0 - 15.0% by weight, relative to the total weight of the composition.

Without wishing to be bound by theory, it is believed that the presence of the humectant allows preventing a too quick drying of the composition, a dry-out and subsequent malfunction of the printhead in intervals without printing operations, and allows reducing the brittleness of the polymer film formed on the particles of building material, thereby possibly contributing to a good adhesion between the particles and improving green strength. It is hence believed that suitable properties can be obtained if amount of humectant is chosen in consideration of the amount of polymer, so that for polymer amounts of e.g. 7.5% or less, the amount of humectant may be 14% or less.

Accordingly, in one embodiment, the binder composition of the present invention contains the polymer and the humectant in an amount that the ratio of polymer to humectant (i.e. weight of polymer, divided by the weight of humectant) is from 0.1 to 2.0, preferably from 0.5 to 2.0.

The humectant is not particularly limited and can be chosen by a skilled person. One humectant may be used alone, or multiple humectants can be used in combination. Examples of suitable humectants include monomeric polyhydric alcohols having a total of 1 to 14 carbon atoms, preferably 2 to 6 or 2 to 4 carbon atoms, such as ethylene glycol, glycerol, butane diol, butane triol, propane diol, etc., sugar alcohols such as sorbitol; poly(ethylene oxide) having from 2 to 100, such as from 2 to 50 or 2 to 30 ethylene oxide units, copolymers of ethylene oxide and propylene oxide having a total of from 2 to 100, such as from 2 to 50 or 2 to 30, units derived from ethylene oxide and propylene oxide, fatty acids having from 4 to 18 carbon atoms, glyoxal, etc. The humectant is preferably soluble, at 20 °C, in the solvent a. at least in the concentration employed. In one embodiment, the humectant is selected from dihydric and trihydric C1 - C6 alcohols, which are preferably selected from ethylene glycol and glycerol, and random or block poly (alkylene oxides), preferably polyethylene oxide, polypropylene oxide, and block polyethylene oxide - polypropylene oxide having a number of alkylene oxide repeating units as defined above.

### d. Surfactant

Unlike the humectant, the presence of a surfactant is optional, but preferably a surfactant is present. The surfactant has a different function as compared to the humectant, as it mainly influences mainly the surface tension of the binder composition, which in turn may influence performance in the printhead and the wetting behavior (spreading) of the binder composition once applied to the particles of building material. As such, the surfactant is different from the humectant c. or the polymer a. in its chemical composition, and a compound described above for the humectant or polymer is not a surfactant in the sense of the present invention even if a humectant or polymer should (also) have an influence on surface tension.

The amount of surfactant can be up to 25%, but is typically lower than that. In practice, an amount of 10% or less or even 5% or less is often sufficient, and in many cases 3% or less, such as 1% or less, of the surfactant are sufficient for achieving the desired surface tension. The desired surface tension is generally from 22 to 32 mN/m, but can be appropriately set in view of the desired wetting characteristics and the equipment employed. This surface tension can be achieved without adding a surfactant for some combinations of solvent, humectant and polymer without the need for an additional surfactant, but if the surface tension of the mixture of solvent, polymer and humectant shows too high surface tension, a surfactant may be added.

The lower limit is not particularly limited given that the surfactant is optional, yet in practice 0.05% by weight or more, such as 0.1% by weight or more, may be used to achieve the desired surface tension. Low amounts of surfactant are in particular sufficient in case the solvent is not pure water, as the solvent tension of mixed solvents is typically lower than that of water.

The surfactant can be nonionic, anionic, cationic or of betaine structure, and is preferably nonionic. It can also be monomeric or polymeric. Polymeric materials described above as polymers b. or humectant c. are not surfactants in the sense of the present invention.

In one embodiment, the surfactant is a polymer, and is preferably a block or graft copolymer, such as a graft copolymer having a polystyrene or poly methyl(meth)acrylate backbone to which methoxy polyethylene oxide has been grafted, or a stryrene/maleic anhydride to which methoxy polyethylene oxide or methoxy polypropylene oxide has been grafted, commercially available under the name TERSPERSE®.

In one embodiment, the surfactant is a polymer that contains a silicon atom. These can e.g. be selected from the class of polyether siloxane copolymers, such as commercially available under the tradename TEGO® Wet.

### e. Optional Additives

Besides the components a., b., c. and the optional component d., the composition may comprise other components (additives) insofar as the suitability as a binder for a 3D printing process is not significantly impaired. While thus the composition may consist of the components a., b., c. and optionally d., other components may be present.

The amount of such other components is typically 25% by weight or less, such as 10% by weight or less, 5% by weight or less, or even 1% by weigh or less, relative to the total weight of the composition, the remainder being formed by the components a., b., and c. as well as d., if present.

Examples of such additives include for instance dyes that may be used in order to provide a visible recognizable indication of areas on which the binder composition of the present invention has been ejected. Other additives may include pH regulators (acids or bases), inorganic or organic salts, such as fluxes, antioxidants, preservatives and other components known in the art.

### B. Additive Manufacturing Method

The additive manufacturing method of the present invention comprises the steps
i. providing particles of an inorganic material, preferably a metallic material;
ii. adhesively binding a portion of the particles by adding a composition as defined in any of claims 1 to 9 as a binder composition;
iii. following step ii., providing further particles and then adhesively binding a portion thereof by adding a composition as defined in any of claims 1 to 9 as a binder composition;
iv. if necessary, removing excess particles that are not adhesively bound,
   to form a green body, and subsequently
v. removing the binder composition to form a brown body; and
vi. sintering the brown body to obtain the desired article.

Such a process is generally known as 3D Printing or Ink Jetting, and a skilled person is generally aware of the process conditions and materials that may be employed. The method of the present invention is distinguished from similar prior art methods mainly in that the binder composition of the present invention is obtained. This opens the potential for obtaining a number of significant benefits, such as increased productivity and/or lower environmental burden. A higher productivity can for instance be achieved due to the lower tendency of the binder composition for clogging the nozzles of a printhead, which reduces the time in which the 3D printer is not operative and running. The method of the present invention using the binder composition is also able to deliver a green body that has sufficient strength (green strength) for further handling, thereby minimizing the number of parts that are damaged during production and thereby increasing productivity.

Due to the excellent compatibility of the binder composition of the present invention, any conventionally used particulate material may be used as particles of an inorganic material employed in step i. This includes metallic materials, such as metals and alloys. The metallic materials include the metallic elements of the periodic table, except for the alkaline metals, the earth alkaline metals, B, Si, Ge, As, Se, Te, Sb, Bi, Po and Hg. Examples include Ti, V, Cr, Mn, Fe, Co, Ni, Cu, Zn, Al, Ga, Zr, Y, Nb, Mo, Tc, Ru, Rh, Pd, Ag, Cd, In, Sn, La, Ta, W, Re, Os, IR, Pt, Au, Ti, and Pd, and alloys of these. The particles are preferably made from iron, copper, titanium, aluminum, and alloys therof, and particular preferably from steel, including stainless steel such as 316L, 17-4, 17-4PH, Ti6Al4V. Inconel 625 and "Mar M247", tool steel, in particular H13 and D2, as well as Ag, Cu and Ti.

In step ii. a portion of the particles provided in step i. (typically in the form of a powder bet) is adhesively bound by applying the binder composition of the present invention. This is typically conducted in accordance with available data for a 3D structure that is ultimately to be formed. The binder composition is ejected from e.g. a printhead (such as an inkjet printhead or a piezo ink head). Due to the excellent balance of properties of the binder composition of the present invention, the binder sufficiently wets the powder and penetrates into the powder only as far as desired. Further, the ejection can be performed precisely, e.g. without unwanted drop formation or leakage from the print head, due to the appropriate adjustment of surface tension.

The applied binder composition may be left to dry for a short period, and optionally heated or irradiated with IR radiation, in order to facilitate the evaporation of the solvent. Thereby, a layer of bound particles is formed.

Subsequently, further particles are added (typically as a layer of particles) on the layer of bound particles and unbound particles. The unbound particles are those that were present previously, but to which no binder composition was applied. Then, the binder composition is again deposited according to digital data processed by the 3D printer, and these steps are repeated until bound layers in the shape of the desired article have been formed. Excess (i.e. unbound) particles are removed, thereby obtaining the so-called Green Part. Here, it is important that that the strength of the Green Part (Green Strength) is sufficient in order to avoid collapse of the structure during further handling.

The influence of the K value/molecular weight and concentration of the polymer on the Green Strength is illustrated in Figures 3 and 4. When only considering the viscosity, it would generally be possible to achieve a given value by either using a polymer having a high K value (molecular weight) in a small concentration in the binder composition, or by using a polymer having a low K value (molecular weight) in a higher amount. But, too low amounts of polymer may not lead to sufficient green strength, even if high molecular weight polymer having a high K value is used (see Figure 3). Further, large amounts of polymer having a low K value (molecular weight) will lead to high viscosity, but will lead to increased costs, given that the costs of polymer by weight is almost independent of its K value.

As illustrated in Figures 3 and 4, the suitable choice of polymer having a certain K value (molecular weight) in a suitable concentration hence allows obtaining simultaneously high green strength and viscosity, and this in a cost-effective manner.

### EXAMPLES

The present invention will be described in more detail by referring to the Examples and Test Methods. The invention should however not be construed as being limited thereto.

### Determination of Viscosity

The viscosity can be determined using a Malvern Instruments Kinexus KNX2100 controlled stress and strain rheometer, using a sample thickness of 0.1 mm between two plates with a diameter of 40 mm (upper plate) and 65 mm (lower plate). Approximately 12 drops of the composition are dropped on the lower plate, the temperature is set to 25 °C.

The viscosity is then determined by measuring the viscosity at different shear rates. Specifically, a shear rate table is established by measuring in three steps, the first being from 1 - 1000 s⁻¹, the second step between 500 and 5,000 s⁻¹, and the third step from 2,000 - 20,000 s⁻¹. The measurement is illustrated in Fig 1. The first values on the left are not valid, because the torque during the measurement was outside the measuring range. The last point shows an increase in viscosity due to turbulences in the sample.

It can be seen that the composition tested shows a Newtonian behavior (i.e. viscosity is independent of shear rate) over a large range of shear rates, showing a viscosity 2 cps (0.002 Pa). This is the viscosity value for the purpose of the present invention, i.e. the value at which a composition that shows Newtonian behavior and the graph in a X-Y coordination system where Y is the viscosity and X is the shear rate is substantially parallel to the X-Axis (see Figure 1). If in doubt, the viscosity at 100 s⁻¹ is defined as viscosity for the purposes of this invention.

### Surface Tension

Surface tension can be determined using a Krüss BP50 bubble tensiometer using the software Krüss Laboratory Desktop with e.g. the following procedure parameters:
Configuration Template: Bubble Pressure
Start at surface age: 10,000 ms
Stop at surface age: 15 ms
Stop Quickscan: 1500 ms
Values: 10
Values for Mgan: 5
Purge Time: 0

Before the measurement, the tensiometer is calibrated using tap water at room temperature as reference medium. In case the surface tension is not constant, the surface tension at surface age of 1 second is considered to be the surface tension for the purposes of the present invention.

The capillary is manually purged for 3s prior to immersion into the composition to be tested, and the temp sensor is cleaned according to the manufacturer's instructions. The capillary is lowered into the composition to be measured by about 1 cm.

### Green Strength

Green Strength can be evaluated by forming TRS bars and performing a 3-point bend test on the green part that was prepared as follows: A rectangular recessed plastic form (length 30 mm x width of 12 mm) is filled with 10 g powder such as 316L, and then the powder is wetter with 0.613 ml of the ink composition to cover the surface. The plastic forms are put in an oven at 200 °C for 3 hours, and the TRS bars are extracted. The green strength is then determined by the following test.

### Bend Testing using a Tensometer

1. Green strength (GS) is measured in MPa (N/mm²). To convert the result from a force indicator that measures force (N) the specimen must be measured (height, width) prior the test.
2. Place the specimen on the support, and raise the specimen close to the load point.
3. Press the start button on the GS-tester.
4. The specimen is cracked when the numbers on the force indicator start to go backwards.

### Examples 1 - 18

Compositions with the polymers shown in Table 1 were prepared by mixing the components thoroughly. The compositions contained the polymer in the indicated amount, 10% by weight ethylene glycol (humectant) and 4% of a 10% by weight solution of the surfactant Tego Wet™ 500, as well as 5% by weight of a 2% solution of a cyan dye in order to facilitate visual inspection of the printing process and the spreading/wetting behavior of the compositions, the remainder being water.

Table 1 also shows the viscosities of the compositions and the Green Strength of parts made using 316L particles according to the test described above.

**Table 1: Examples 1 - 18**

| **Ex. No.** | PVP K10 | PVP K25 | PVP K40 | PVP Mw 55,000 | Viscosity (mPa.s) | GS (MPa) |
|---|---|---|---|---|---|---|
| 1 | 2 | | | | 0.9 | 1.6 |
| 2 | 6 | | | | 1.5 | 4 |
| 3 | 8 | | | | 1.7 | 5 |
| 4 | 10 | | | | 2.3 | 7.1 |
| 5 | 12 | | | | 2.6 | 8.6 |
| 6 | 14 | | | | 2.4 | 7.9 |
| 7 | 16 | | | | 2.8 | 9.5 |
| 8 | | 2 | | | 1.2 | 1.6 |
| 9 | | 5 | | | 2.1 | |
| 10 | | 6 | | | 2.3 | 4.6 |
| 11 | | 8 | | | 3.3 | 5.6 |
| 12 | | 10 | | | 4.5 | 7.5 |
| 13 | | 12 | | | 4.5 | 7.4 |
| 14 | | 16 | | | 7.9 | 7.7 |
| 15 | | | 5 | | 1.8 | 3.3 |
| 16 | | | 10 | | 4.6 | 6.1 |
| 17 | | | | 5 | 3.1 | 3.6 |
| 18 | | | | 10 | 7.8 | 8 |

In the above, GS denotes the Green Strength.
The table clearly shows the influence of the amount and the K value (molecular weight) on the viscosity and the Green Strength of the green part, as also illustrated in Figures 2 and 3.

### Examples 19 - 33

Further compositions were prepared as shown in Table 2, the remainder being water. Note that EG stands for ethylene glycol (humectant), PG stands for propylene glycol (humectant), IPA stands for isopropanol (solvent), 1,2 HD stands for 1,2 hexane diol and Tego Wet 500 and Tego Wet 200 are surfactants. The components are given in weight% relative to the total of the compositions.

The compositions were used in 3D Printing of test cubes, and were evaluated using an evaluation scheme with values of 1 to 5, where 5 represents the best.

| **Ex. No.** | PVP K15 | PVP K25 | PVP K30 | PVP K50 | B(OH)₃ | EG | PG | 1,2 HD | IPA | TW 500 | TW 200 | Wetting | Stay as printed | GS | Top Surface | Bottom Surface |
|---|---|---|---|---|---|---|---|---|---|---|---|---|---|---|---|---|
| Example 19 | 9 | | | | | 4.4 | | | 15 | 0.07 | | 1 | 1 | 1 | 1 | 1 |
| Example 20 | 5 | | | | | 16 | | | 5 | 1 | | 3 | 2 | 3 | 3 | 2 |
| Example 21 | 5 | | | | | | | 16 | 5 | | | 3 | 1 | 3 | 3 | 2 |
| Example 22 | 5 | | | | | | | 16 | 5 | | | 3 | 1 | 3 | 3 | 2 |
| Example 23 | 5 | | | | | 16 | | | 5 | | | 3 | 1 | 2 | 3 | 2 |
| Example 24 | 5 | | | | | 10 | | | | 0.49 | | 3 | 4 | 4 | 4 | 4 |
| Example 25 | 12 | | | | | 10 | | | | 0.45 | | 3 | 3 | 2 | 3 | 3 |
| Example 26 | 5 | | | | | | | 9.9 | | 0.52 | | 4 | 4 | 4 | 4 | 3 |
| Example 27 | 5 | | | | | | 10 | | | 0.47 | | 4 | 4 | 4 | 4 | 3 |
| Example 28 | 7 | | | | | 10 | | | | 0.45 | | 2 | 3 | 4 | 2 | 2 |
| Example 29 | 6.9 | | | | | 5 | 5 | | | 0.45 | | 3 | 3 | 5 | 3 | 2 |
| Example 30 | | | 5 | | | 10 | | | | 0.45 | | 4 | 5 | 5 | 5 | 3 |
| Example 31 | | 5 | | | | 10 | | | | 0.45 | | 3 | 5 | 5 | 5 | 3 |
| Example 32 | 5 | | | | | 10 | | | | 0.45 | 0.6 | 1 | 2 | 3 | 1 | 1 |
| Example 33 | 5 | | | | 0,78* | 10 | | | | | | 3 | 5 | 5 | 3 | 2 |

As can be seen, the maximum score (representing the best balance of properties) can be obtained when the composition satisfies the preferred and more preferred features of the present invention, as described above.

## Claims

1. A composition that is a liquid at 25°C and 10⁵ Pa pressure, the composition comprising
a. one or more solvents selected from water-miscible solvents and water;
b. one or more polymers selected from the group consisting of polyvinyl pyrrolidones having a weight average molecular weight of 2,500 to 80,000 and polyvinyl alcohols having a weight average molecular weight of 2,500 to 80,000, the total amount of the one or more polymers being 1 - 15% by weight, relative to the total weight of the composition;
c. one or more humectants in a total amount of 0.1 to 25% by weight, relative to the total weight of the composition; and
d. optionally one or more surfactants in a total amount of up to 25% by weight of the total weight of the composition.

2. The composition according to claim 1, which has a dynamic viscosity η of 1.0 - 12.0 mPa·s, preferably 1.5 - 6.0 mPa·s, more preferably 1.7 to 4.0 mPa·s.

3. The composition according to claim 1 or claim 2, wherein the amount of the one or more solvents is from 45 to 85% by weight; relative to the total weight of the composition.

4. The composition according to any one of claims 1 to 3, wherein the polymers b. comprise or consist of one or more polyvinyl pyrrolidones, and wherein preferably all of the one or more polyvinyl pyrrolidones have a K-value of 5 to 35.

5. The composition according to any one of claims 1 - 4, which has a surface tension of 22 - 32 mN/m.

6. The composition according to any one of claims 1 to 5,
wherein the one or more solvents consist of water only,
or
wherein the one or more solvents form a mixture consisting of 70% by weight or more of water and 30% by weight or less of one or more water-soluble solvents,
wherein the one or more water-soluble solvents are preferably selected from the group of C1 - C6 monohydric primary, secondary and tertiary alcohols and C1 - C6 ketones.

7. The composition according to any one of claims 1 to 6, wherein the one or more humectants are selected from dihydric and trihydric C1 - C6 alcohols, which are preferably selected from ethylene glycol and glycerol, and random or block poly (alkylene oxides), preferably polyethylene oxide, polypropylene oxide, and block polyethylene oxide - polypropylene oxide.

8. The composition according to any one of claims 1 to 7, wherein the optional surfactant is present and is selected from anionic, cationic, and nonionic surfactants.

9. The composition according to claim 8, wherein the surfactant is nonionic and is preferably a polymeric surfactant.

10. Use of a composition according to any one of claims 1 to 9 as a binder for inorganic, preferably metallic, particles.

11. Use according to claim 10, which involves the ejection of the composition from a printhead, preferably an inkjet print head or a piezo print head.

12. An additive manufacturing method for producing an article, comprising the steps of
i. providing particles of an inorganic material, preferably a metallic material;
ii. adhesively binding a portion of the particles by adding a composition as defined in any of claims 1 to 9 as a binder composition;
iii. following step ii., providing further particles and then adhesively binding a portion thereof by adding a composition as defined in any of claims 1 to 9 as a binder composition;
iv. if necessary, removing excess particles that are not adhesively bound,
to form a green body, and subsequently
v. removing the binder composition to form a brown body; and
vi. sintering the brown body to obtain the desired article.

13. The additive manufacturing method according to claim 12, wherein the particles are made from a metal or metal alloy, preferably stainless steel, titanium or Ni-C alloys such as Inconel.

14. The additive manufacturing method according to claim 12 or 13, wherein the addition of the composition as defined in any one of claims 1 to 9 in step ii. and step iii. involves ejecting the composition from a print head.

15. The method as defined in claim 14, wherein the printhead is an inkjet print head or a piezo print head.

16. The method according to any one of claims 12 to 15, wherein the particles in step i. are provided in the form of a powder bed.

17. A green body, obtainable by a process comprising process steps i. - iv. as defined in any one of claims 12 to 16.
